# FASCICULE DE BREVET EUROPEEN

(11) **EP 2 547 036 B1**
(45) Date de publication et mention de la délivrance du brevet: **20.03.2019**
(21) Numéro de dépôt: 12176481.5
(22) Date de dépôt: 15.07.2012
(51) Int. Cl.: G06F 21/64, H04L 9/32, G06Q 10/10, G06Q 50/18

(54) **Procédé de signature authentique d'un document de travail**
Verfahren zur authentischen Unterzeichnung eines Arbeitsdokuments
Authentic signing method of a working document

(30) Priorité: 15.07.2011 FR 1156455
(43) Date de publication de la demande: 16.01.2013
(73) Titulaire: Dictao, 75116 Paris (FR)
(72) Inventeur: Daouphars, Raphaël, 75116 Paris (FR); Desperrier, Jean-Marc, 75116 PARIS (FR); Fournié, Laurent, 75116 PARIS (FR)
(74) Mandataire: Jacobacci Coralis Harle

(56) Documents cités:
- WO-A1-01/67712
- WO-A1-2005/085971
- WO-A2-01/95071
- US-A1- 2001 049 789
- Karl Scheibelhofer: "Signing XML Documents and the concept of "What you see is what you sign"", Master's Thesis in Telematics, 31 janvier 2001 (2001-01-31), XP055019872, Extrait de l'Internet: URL:http://citeseerx.ist.psu.edu/viewdoc/d ownload?doi=10.1.1.8.4870&rep=rep1&type=pd f [extrait le 2012-02-20]
- HOUSLEY VIGIL SECURITY R: "Cryptographic Message Syntax (CMS); rfc5652.txt", CRYPTOGRAPHIC MESSAGE SYNTAX (CMS); RFC5652.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 septembre 2009 (2009-09-01), XP015065681, [extrait le 2009-09-17]

## Description

La présente invention concerne le domaine technique de la signature électronique ou signature numérique utilisée pour traduire le consentement du signataire sur le contenu de documents susceptibles de formaliser une relation contractuelle. L'invention concerne plus particulièrement le domaine des procédés mis en oeuvre pour qu'un signataire ait la garantie que le document qu'il visualise préalablement à l'exécution du processus de signature électronique correspond bien au fichier faisant effectivement l'objet de la signature électronique. Il s'agit de garantir que utilisateur possède une connaissance parfaite de ses engagements formalisés par le fichier signé.

Cette garantie nécessaire à la sécurité juridique des opérations contractuelles et/ou financières effectuées sous forme purement électronique est exprimée par l'acronyme WYSIWYS pour en anglais « What You See ls What You Sign » soit en français « ce que vous voyez est ce que vous signez ».

Afin d'assurer un control d'intégrité des fichiers générés et affichés, un document US 2001/049789 a proposé lors de la création d'un fichier de travail par un serveur d'associer à ce fichier de travail une première empreinte numérique. De plus, le serveur utilise un processeur d'affichage pour générer un fichier d'affichage à partir duquel il établit une deuxième empreinte numérique. Ensuite, le serveur transmet, à un client le fichier de travail, ainsi que les deux empreintes de sorte que le client peut, d'une part, vérifier l'intégrité du fichier de travail. D'autre part, le client génère avec un processeur d'affichage de confiance un fichier d'affichage dont il calcule l'empreinte pour la comparer avec la deuxième empreinte reçu du serveur et vérifier la conformité du fichier d'affichage. Un tel processus présente l'inconvénient de nécessiter un processeur d'affichage de confiance au niveau du client de sorte qu'il n'est pas possible de faire évoluer facilement le format du fichier de travail.

Une publication intitulée « Robust WYSIWYS : a Method for Ensuring What You See Is What You Sign » de Audun Josang et Bander AIFayyadh [(AISC2008) (CRPPIT Vol.81 Ljiljana, Brankovic and Mirka Miller, Eds)] a proposé de mettre en oeuvre un appareil photo numérique pour procéder à l'acquisition d'une image numérique de l'écran sur lequel s'affiche la représentation graphique du fichier à signer. L'image numérique photographiée fait ensuite l'objet d'un processus de reconnaissance de caractères qui génère un fichier qui est comparé au fichier à signer pour en cas de comparaison positive envoyer un signal de concordance à l'utilisateur de manière qu'il puisse initier le processus de signature électronique. La mise en oeuvre d'un appareil photo numérique rend un tel mode opératoire inutilisable en pratique pour la validation de transactions en grand nombre ou de documents longs qui ne sont pas susceptibles de s'afficher sur un seul écran. De plus, les traitements de reconnaissance de caractères induisent nécessairement des erreurs de reconnaissance qui sont susceptibles d'affecter la fiabilité d'un tel mode opératoire.

Afin de répondre également aux besoins de sécurité en matière de signature électronique pour ce qui concerne le fichier effectivement signé, une demande de brevet EP 1 055 989 a proposé de mettre en oeuvre un processeur d'affichage de confiance intégré dans un environnement matériel de travail sécurisé tel qu'une carte à puce ou un processeur et une mémoire sécurisé ou de confiance distincts du processeur et de la mémoire du système informatique sur lequel est implémenté le processus de signature électronique. Le processeur d'affichage de confiance génère des images du fichier à signer qui font ensuite l'objet d'une signature électronique. Un tel système permet effectivement de signer des images réputées fidèles du fichier à signer mais présente l'inconvénient de nécessiter un processeur d'affichage de confiance mis en oeuvre dans un environnement matériel de confiance au niveau du poste client. Un tel système présente également l'inconvénient de nécessiter un processeur d'affichage pour chacun des types de fichiers susceptibles d'être signé. De plus, le fichier ayant effectivement fait l'objet d'une signature est un fichier image qui n'est pas exploitable en l'état dans des processus automatisés de traitement des données.

Il est donc apparu le besoin d'un nouveau procédé de signature authentique d'un document de travail qui soit simple à mettre en oeuvre tant au niveau de l'émetteur du document travail que du poste de l'utilisateur devant signer électroniquement ce document. Il existe également le besoin d'un procédé de signature authentique qui offre une garantie à l'utilisateur que son engagement porte effectivement sur les éléments qui se sont affichés sur son poste de travail avant initiation du processus de signature. Il existe aussi le besoin d'un procédé de signature authentique qui permette de disposer, de manière certifiée authentique et signée, du document de travail dans un format directement exploitable par un système automatisé de traitement des données Il est apparu égalent le besoin d'un procédé de signature authentique qui soit en mesure d'être mis en oeuvre avec différents types de formats du document de travail de manière à pouvoir suivre les évolutions techniques et les besoins d'évolution des formats des documents de travail en fonction des applications. Il existe par ailleurs le besoin d'un procédé de signature pouvant être mis en oeuvre à partir d'un poste client sans dispositif matériel complémentaire spécifique.

Afin de répondre à l'ensemble de ces besoins, l'invention concerne un procédé de signature authentique d'un document de travail conforme à la revendication 1.

Au sens de l'invention le document de travail est un fichier dans un format adapté pour un traitement automatisé des données qu'il renferme. Ainsi le document de travail peut, par exemple, comprendre un ou plusieurs champs identifiés dont les valeurs sont susceptibles d'être extraites de manière automatisée. Parmi les formats ouverts susceptibles d'être mis en oeuvre, il est possible de citer XML étant entendu que le format du document de travail peut être un autre format ouvert ou encore un format propriétaire.

En réalisant une seule signature à partir de l'ensemble du fichier à signer, le procédé selon l'invention présente l'avantage d'assurer la signature conjointe du document de travail et du fichier de représentation toute en permettant de procéder à une authentification séparée de ces deux éléments dans la mesure où le fichier à signer comprend, d'une part, l'empreinte numérique du document de travail (i.e. l'empreinte numérique de travail) et, d'autre part, l'empreinte numérique du fichier de représentation (i.e. l'empreinte de représentation). Ainsi, les différents destinataires et/ou utilisateurs du document de travail ont la possibilité de vérifier l'authenticité du document de travail de manière à l'utiliser dans différents processus automatisés sans avoir à mettre en oeuvre des traitements consommateurs de ressources tels que ceux nécessaires pour vérifier l'authenticité du fichier de représentation qui est par nature est généralement plus volumineux que le document de travail. La vérification de l'authenticité du fichier de représentation peut alors être effectuée uniquement en cas de litige sur l'authenticité du document de travail et, notamment, la nature des engagements qu'il formalise.

L'invention permet donc de mettre en oeuvre une authentification systématique du document de travail associé à une authentification à la demande ou exceptionnelle du fichier de représentation. Dans le cadre d'un processus visant à protéger l'utilisateur ayant apposé sa signature dans un contexte de « WYSIWYS » il pourra alors être considéré que seul le contenu du fichier de représentation engage juridiquement l'utilisateur.

Le procédé selon l'invention présente, en outre, l'avantage de faire intervenir la génération du fichier de représentation au niveau du serveur distant de sorte que le poste client n'a pas besoin de disposer des ressources logicielles et matérielles nécessaires à l'opération de génération du fichier de représentation. Ainsi, en cas de modification du format du document de travail, il n'est pas nécessaire de procéder à une mise à jour du poste client dans la mesure où le fichier de représentation est créé dans un format déjà lisible par le poste client.

Au sens de l'invention, le fichier de représentation est de préférence un fichier destiné à une présentation via une interface homme-machine dans une forme directement intelligible par l'utilisateur. Par forme directement intelligible par l'utilisateur, il faut entendre une forme susceptible d'être comprise par l'utilisateur sans l'assistance de dispositif de mise en forme tiers. Parmi les formes directement intelligibles par un utilisateur, il est possible de citer :
- des formes graphiques telles que par exemple des représentations graphiques dans un système d'écriture alphabétique ou non,
- des formes sonores dans une langue intelligible par l'utilisateur,
- des images animées ou non,
- une transcription dans une représentation tactile telle que l'alphabet braille susceptible d'être délivrée à l'utilisateur au moyen d'un dispositif électromécanique adapté,
- des combinaisons de ces différentes formes
cette liste n'étant ni limitative, ni exhaustive.

Ainsi le fichier de représentation peut être constitué de données d'au moins une des catégories suivantes :
- images,
- dessins vectoriel,
- son,
- vidéo.

Dans un certain nombre de cas de figure, par exemple si une représentation sous la forme de dessin vectoriel est utilisée, le fichier de représentation pourra dans les faits représenter le document de manière très efficace et être en pratique plus compact que le document de travail d'origine. Ainsi, le changement de format permet en soit parfois d'être gagnant et de transmettre le fichier de représentation plus efficacement qu'on aurait pu transmettre le document de travail.

Le processus de génération du fichier de représentation à partir du document de travail pourra devenir pour un certain nombre de format un processus standardisé, de telle sorte qu'il suffira de l'identifier pour qu'un destinataire puisse vérifier complètement et automatiquement l'authenticité du document de travail même en dehors des cas de litige.

De manière préférée, le fichier de représentation est un fichier statique possédant une stabilité ou invariance sémantique de sorte que son contenu est indépendant du temps, de données extérieures au fichier de représentation, et de l'environnement d'exécution de l'étape de présentation. L'étape de génération du fichier de représentation sera donc de préférence adaptée pour générer un fichier dont le contenu intelligible par l'utilisateur n'est pas une fonction de l'environnement dans lequel le fichier de représentation est présenté ou soumis à l'utilisateur humain. Ainsi, les données d'un même fichier de représentation sont interprétables de manière identique par deux utilisateurs différents, sur deux machines différentes, à deux instants différents.

Dans cet esprit et dans le cas où le fichier le fichier de représentation est trop volumineux pour être acheminé de manière rapide via le réseau de communication étendu, selon une variante de l'invention, le fichier de représentation est adapté pour une présentation ou lecture en continu et comprend au moins une séquence susceptible de faire l'objet d'une présentation, le contenu de chaque séquence du fichier de représentation étant :
- indépendant du contenu des éventuelles séquences qui lui font suites,
- éventuellement dépendant du contenu de la séquence qui la précède immédiatement,

indépendant de l'environnement d'exécution de l'étape de présentation.Cette caractéristique du fichier de représentation présente de plus l'avantage de permettre à l'utilisateur de prendre connaissance du document au fur et à mesure de sa transmission au poste client, sans attendre que le fichier de représentation soit entièrement transmis. Cette caractéristique du fichier permet aussi de traiter les séquences indépendamment les unes des autres en particulier lorsque les ressources du poste client ne sont pas suffisantes pour les traiter simultanément.

Le fichier de représentation peut aussi ainsi être séparé en une série d'éléments individuels, dont la transmission peut être déclenchée individuellement. Ce cas de figure ouvre la possibilité pour l'utilisateur de décider d'approuver la signature du document sans nécessairement avoir souhaité prendre connaissance de tous ses éléments. En fonction de la législation applicable au signataire, ce cas peut être autorisée, ainsi l'application peut permettre à l'utilisateur prenne connaissance de l'ensemble du document avant de le signer mais ne pas faire obstacle à ce que l'utilisateur puisse signer le document même s'il n'en a pas visualisé. Dans ce cas de figure, le procédé peut donc être optimisé en ne transmettant effectivement que les parties du fichier de représentation dont l'utilisateur indique souhaiter prendre connaissance ; l'empreinte numérique de l'ensemble du fichier de représentation sera cependant dans tous les cas transmise pour être inclue dans la signature avec éventuellement l'indication des parties que l'utilisateur n'a pas demandé à visualiser.

Selon une caractéristique de l'invention, visant à s'assurer que l'utilisateur a eu la possibilité de prendre connaissance du contenu intelligible du fichier de représentation, le procédé de signature authentique d'un document de travail comprend, en outre, les étapes suivantes :
- présentation sur le poste client et à un utilisateur du poste client d'une partie au moins du fichier de représentation
- initiation par l'utilisateur de l'étape de génération de signature.

Selon l'invention les étapes de génération de l'empreinte numérique de représentation, de génération du fichier à signer, de génération du fichier de signature peuvent être réalisées sur un même serveur ou poste de travail ou sur plusieurs serveurs ou postes de travail.

Selon une première forme de mise en oeuvre du procédé de signature authentique d'un document de travail conforme à l'invention, l'empreinte numérique du fichier de représentation et le fichier à signer sont générés par le poste client.

Selon une deuxième forme de mise en oeuvre du procédé de signature authentique d'un document de travail conforme à l'invention, l'empreinte numérique du fichier de représentation et le fichier à signer sont générés par le serveur distant et/ou un serveur tiers et transmis au poste client via le réseau de communication étendu. Cette deuxième forme de mise en oeuvre permet de limiter le nombre d'opérations effectuées au niveau du poste client de sorte qu'il est possible de limiter les ressources logicielles et matérielles du poste client nécessaires à l'accomplissement des étapes du procédé conforme à l'invention

Selon une variante de cette deuxième forme de mise en oeuvre du procédé de signature authentique d'un document de travail conforme à l'invention, le procédé fait également intervenir les étapes suivantes :
- génération par le poste client d'une empreinte numérique du fichier de représentation, dite empreinte de représentation de contrôle,
- comparaison, par le poste client, de l'empreinte de représentation contenue dans le fichier à signer avec l'empreinte de représentation de contrôle pour en cas de comparaison positive autoriser la génération de la signature client.

Cette variante, permet de sécuriser de manière simple la phase de transmission du fichier de représentation.

Selon l'invention le fichier de signature peut être généré par le poste client mais peut également être généré par un autre système informatique. Ainsi, selon une variante de l'invention, le fichier de signature est généré par le serveur distant ou un serveur tiers.

Selon une caractéristique de l'invention visant à augmenter la sécurité et la traçabilité des étapes ainsi que la pérennité du procédé selon l'invention, l'étape de génération du fichier de représentation met en oeuvre un oeuvre un programme identifié de transformation du document de travail en fichier de représentation.

Il est à noté que le programme de transformation est déterministe. Le caractère déterministe du programme de transformation correspond au fait que pour un document de travail donné le fichier de représentation généré à chaque mise en oeuvre du programme de transformation est toujours strictement identique au fichier de représentation généré lors de la première mise en oeuvre du programme de transformation. Ainsi, l'empreinte de représentation générée à partir de chaque fichier de représentation d'un même document de travail est strictement identique à l'empreinte de représentation générée à partir du premier fichier de représentation.

Selon une autre variante de cette caractéristique de l'invention visant également à offrir une traçabilité des différentes étapes et outils mis en oeuvre par le procédé conforme à l'invention, le fichier de représentation est associé à un identifiant du programme de transformation.

Dans le cadre de cette variante, l'identifiant du programme de transformation peut être une empreinte numérique du code exécutable du programme de transformation.

Dans le même esprit et selon encore une autre variante de cette caractéristique de l'invention, le fichier à signer comprend l'identifiant du programme de transformation.

Dans la mesure où toutes les étapes du procédé selon l'invention ne sont pas nécessairement réalisées sur un même serveur ou poste de travail, il peut être intéressant de mettre en oeuvre des mécanismes de traçabilité permettant une identification du ou des serveurs ayant effectué certaines des étapes du procédé.

Ainsi selon une autre caractéristique de l'invention, le fichier à signer comprend une signature serveur générée par le serveur distant s'appliquant sur au moins l'un des éléments suivants :
- l'empreinte de travail,
- l'empreinte de représentation,
- l'identifiant du programme de transformation.

L'invention concerne également la ou les phases de vérification du document de travail préalablement authentifié et signé dans le cadre du procédé de signature authentique conforme à l'invention. Ainsi, selon une caractéristique de l'invention le procédé de signature authentique comprend une phase de vérification de l'authenticité du document de travail à partir du fichier de signature associé à ce document qui comprend les étapes suivantes :
- extraction à partir du fichier de signature de l'empreinte de travail,
- calcul d'une nouvelle empreinte numérique à partir du document de travail,
- comparaison de l'empreinte de travail et de la nouvelle empreinte numérique pour en cas d'identité conclure à l'authenticité du document de travail.

Selon une autre caractéristique de l'invention le procédé de signature authentique comprend une phase de vérification de l'authenticité du fichier de représentation du document de travail à partir du fichier de signature associé au document de travail :
- extraction à partir du fichier de signature de l'empreinte de représentation,
- génération, à partir du document de travail, d'un nouveau fichier de représentation,
- calcul d'une nouvelle empreinte numérique à partir du nouveau fichier de représentation,
- comparaison de l'empreinte de représentation et de la nouvelle empreinte numérique pour en cas d'identité conclure à l'authenticité du fichier de représentation du document de travail.

Selon encore une caractéristique de l'invention le procédé de signature authentique comprend une phase de vérification de l'authenticité complète constituée de la phase de vérification du document de travail et de la phase de vérification du fichier de représentation.

Lorsqu'il a été mis en oeuvre une étape de signature par un serveur distant le procédé selon l'invention pourra comprendre une vérification de la signature serveur.

Bien entendu les différentes caractéristiques, variantes et formes de mise en oeuvre du procédé de signature authentique d'un document de travail selon l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description ci-dessous et des schémas en référence qui illustrent des formes non limitatives de mise en oeuvre du procédé, selon l'invention, de signature authentique d'un document de travail.
- La figure 1 illustre de manière schématique un contexte possible de mise en oeuvre de l'invention.
- La figure 2 illustre de manière schématique les différentes étapes d'une première forme de mise oeuvre du procédé de signature, utilisant un format détaché, entre un serveur distant et un poste client.
- La figure 3 illustre de manière schématique les différentes étapes d'une phase de vérification de l'authenticité du document de travail à partir d'une signature authentique générée par la mise en oeuvre du procédé selon l'invention.
- La figure 4 illustre de manière schématique les différentes étapes d'une phase de vérification de l'authenticité de du fichier de représentation à partir d'une signature authentique générée par la mise en oeuvre du procédé selon l'invention.
- La figure 5 illustre de manière schématique les différentes étapes d'une deuxième forme de mise en oeuvre du procédé de signature entre un serveur distant et un poste client.
- La figure 6 illustre de manière schématique les différentes étapes d'une variante de deuxième forme de mise en oeuvre du procédé de signature entre un serveur distant et un poste client avec intervention d'un deuxième serveur distant pour la formation du fichier de signature.

Il est à noter que sur ces figures les étapes communes aux différentes formes ou variantes présentent les mêmes références.

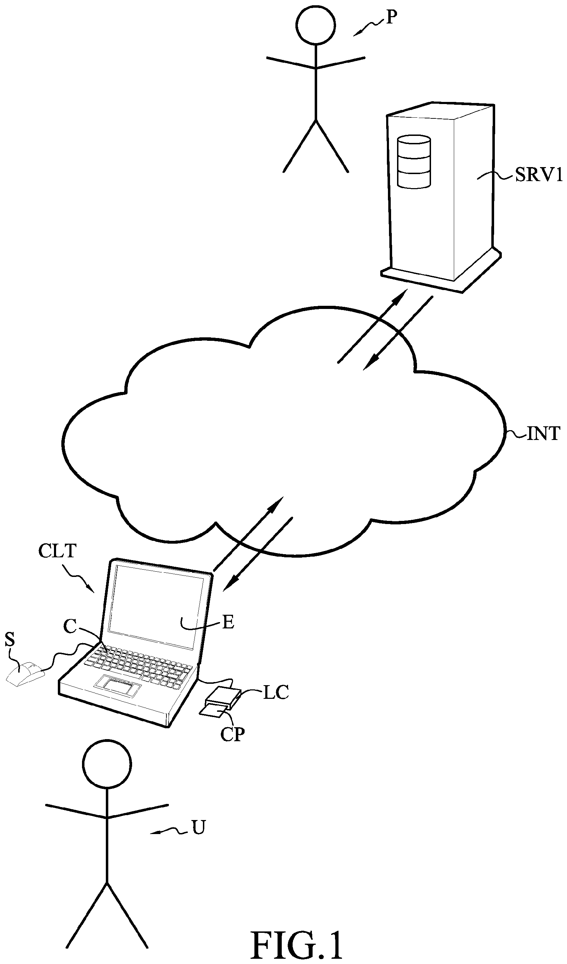

Le procédé de signature authentique selon l'invention est susceptible d'être mis en oeuvre dans le cadre, par exemple mais non exclusivement, de l'acquisition de biens ou de la souscription à des services par un utilisateur U auprès d'un prestataire P dans le cadre d'un processus complètement dématérialisé. À cet effet et comme le montre la figure 1, le prestataire P dispose d'un serveur distant SRV1 raccordé à un réseau de communication étendu INT tel que par exemple INTERNET. L'utilisateur U dispose, quant à lui, d'un poste client CLT formé, par exemple, par un ordinateur personnel comprenant une interface homme machine. Selon l'exemple illustré, l'interface homme machine se compose d'un écran tactile ou non associé à un clavier C ainsi qu'à un dispositif de pointage S tel que par exemple une souris. Dans le cas présent, le poste client CLT comprend un lecteur de carte à puce LC et l'utilisateur U détient une carte à puce CP. Le poste client CLT est également raccordé au réseau de communication étendu INT.

Dans le cadre d'un processus interactif entre l'utilisateur U et le serveur distant SVR1 via le poste client CLT, l'utilisateur U détermine les caractéristiques d'une transaction qu'il souhaite réaliser avec le prestataire P. Ces caractéristiques sont agrégés au niveau du serveur distant SRV1 sous la forme d'un document de travail DOC qui est adapté pour faire l'objet d'un traitement automatisé permettant au prestataire P d'effectuer les différentes opérations de la transaction. Le document de travail peut, par exemple, comprendre différentes informations telles que les coordonnées de l'utilisateur, la nature de la prestation objet de la transaction, le prix de cette prestation, les conditions d'exécution et de garantie de la prestation, le mode de paiement avec les coordonnées bancaires de l'utilisateur U. Le document de travail DOC est établi dans un format permettant d'extraire de manière automatisée les informations qu'il comprend. À titre d'exemple le document de travail peut être établi en langage XML. Un tel langage est particulièrement adapté pour faire l'objet de traitements automatisés mais présente l'inconvénient de ne pas être directement intelligible pour un néophyte. Ainsi, la lecture du document de travail dans sa forme brute ne permet pas à l'utilisateur U d'avoir une connaissance de la nature complète de la transaction associée au document de travail.

Afin de permettre à l'utilisateur de connaître la nature de la transaction associée au document de travail DOC, il est nécessaire de générer une présentation du document de travail DOC dans une forme directement intelligible par l'utilisateur. C'est à partir de cette forme directement intelligible que l'utilisateur pourra décider de valider la transaction dans le cadre d'un processus d'apposition d'une signature électronique au moyen par exemple de la carte à puce CP. Bien entendu, dans le cadre de l'invention, la carte à puce n'est le seul moyen de signature susceptible d'être mis en oeuvre et il peut être utilisé tous autres moyens appropriés de signature, ces moyens pouvant être de nature logicielle et/ou matérielle.

L'invention propose notamment de sécuriser la présentation du document de travail DOC dans sa forme directement intelligible de manière que l'utilisateur U ait la garantie que ce qu'il signe correspond à ce qui lui a été présenté. Dans le cas d'une présentation visuelle, l'utilisateur doit avoir la garantie que ce qu'il voit correspond à ce qu'il signe, principe résumé par l'acronyme WYSISWYS.

L'invention propose également de sécuriser ou d'authentifier le document de travail en lui-même de manière à sécuriser les opérations susceptibles d'être effectuées par le prestataire P ou des tiers à partir du document de travail DOC.

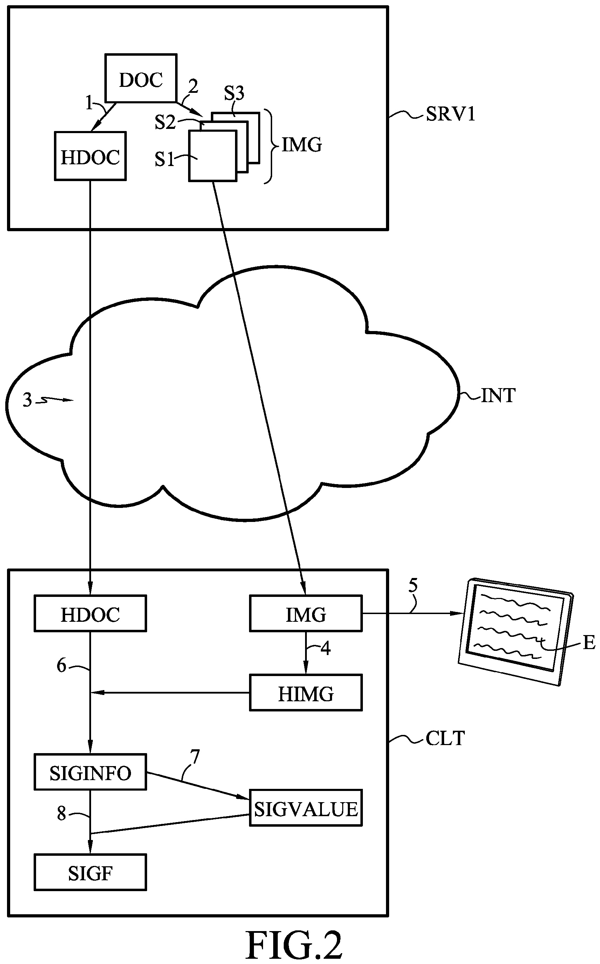

Ainsi, dans une forme de mise en oeuvre du procédé selon l'invention dont différentes étapes sont illustrées à la figure 2, le serveur distant SVR1 génère dans une étape 1 une empreinte numérique du document de travail DOC, dite empreinte numérique de travail HDOC.

De manière générale et connue de l'homme du métier, la génération d'une empreinte numérique d'un fichier ou document numérique comprend une opération de hachage consistant à appliquer une fonction de compression à sens unique sur le fichier ou document numérique. Parmi les fonctions de compression à sens unique, encore appelées fonctions de hachage, susceptibles d'être utilisées, il est possible de citer WHIRLPOOL, SHA-1, SHA-2, ou encore RIPE-MD-160, cette liste n'étant ni limitative, ni exhaustive.

Dans le cadre de l'invention la génération de l'empreinte de travail HDOC peut faire intervenir, avant l'opération de hachage, une opération de mise en forme canonique du document de travail HDOC notamment lorsque ce dernier est établi dans le format XML.

Après exécution de l'étape 1 le serveur distant SRV1 dispose du document de travail DOC et de l'empreinte de travail HDOC.

Dans une étape 2, le serveur distant SRV1 génère un fichier de représentation IMG du fichier de travail DOC. Le fichier de représentation IMG est destiné à permettre une présentation, sur le poste client CLT, du document de travail DOC et/ou de la transaction correspondant au document de travail dans une forme intelligible par l'utilisateur. Afin de permettre une ergonomie de présentation compatible avec les débits autorisés par le réseau de communication étendu INT, le fichier de représentation sera de préférence adapté pour une présentation ou une lecture en continu. Le fichier de représentation comprend alors au moins une séquence susceptible de faire l'objet d'une présentation de manière autonome. Dans l'éventualité où la taille du fichier de représentation impose le recours à plusieurs séquences, le contenu de chaque séquence est indépendant du contenu des éventuelles séquences qui lui font suite tout en étant éventuellement dépendant du contenu de la séquence qui la précède immédiatement si, par exemple, le format du fichier de représentation est un format faisant intervenir une compression par différence.

Selon l'exemple illustré, le fichier de représentation IMG comprend des images d'un document contractuel dactylographié correspondant à la transaction définie par le document de travail. Le fichier de représentation IMG comprend ici trois séquences S1, S2, S3 qui sont trois fichiers au format BITMAP des trois pages du document contractuel dactylographié. Dans le cadre d'une représentation graphique statique, le format BITMAP a été choisi en raison de son caractère universel. Cependant, divers autres formats pourraient être utilisés.

L'étape 2 de génération du fichier de représentation IMG fait de préférence intervenir un programme identifié de transformation qui aura un caractère déterministe. L'identifiant du programme de transformation peut, par exemple, être une empreinte numérique du code exécutable du programme de transformation. Cet identifiant pourra alors être utilisé dans le cadre du procédé selon l'invention comme cela apparaîtra par la suite.

Après exécution des étapes 1 et 2, le serveur distant SRV1 dispose du document de travail DOC, de l'empreinte de travail HDOC et du fichier de représentation IMG. Il doit être remarqué que l'ordre d'exécution des étapes 1 et 2 est indifférent et qu'elles peuvent également être réalisées de manière simultanée. De plus, il doit être noté que le document de travail DOC n'est pas nécessairement établi par le serveur qui effectue les étapes 1 et 2 mais peut lui avoir été transmis par un autre serveur.

Selon l'exemple illustré, le serveur distant SRV1 transmet, dans une étape 3, au poste client CLT via le réseau de communication étendu INT, l'empreinte de travail HDOC et le fichier de représentation IMG.

Dans une étape 4, le poste client génère une empreinte numérique du fichier de représentation IMG dite empreinte numérique de représentation HIMG. Dans une étape 5 le poste de travail procède à la présentation à l'utilisateur U d'une partie au moins du fichier de représentation IMG. Dans le cas de l'exemple illustré, le poste client affiche sur l'écran E chacune des séquences S1 àS3 dont l'utilisateur peut contrôler le défilement au moyen du clavier C et/ou de la souris S. L'ordre de réalisation des étapes 4 et 5 est indifférent. Toutefois, afin de faciliter la prise en charge de fichiers de représentation particulièrement volumineux, il pourra être choisi de procéder tout d'abord à l'étape 5 présentation de manière à permettre le chargement de l'intégralité du fichier de représentation avant de procéder à la génération (étape 4) de l'empreinte numérique de représentation HIMG.

Au sens de l'invention, lorsque le fichier de représentation IMG comprend plusieurs séquences, l'empreinte numérique de représentation HIMG peut être formée par :
- soit une seule valeur qui est le résultat de l'application de la fonction de hachage à l'ensemble des séquences et donc du fichier de représentation,
- soit une série de valeurs qui comprend autant de valeurs que de séquences et dont chaque valeur est le résultat de l'application de la fonction de hachage à une séquence.

Lorsque le poste client CLT a généré l'empreinte de représentation HIMG, il peut, dans une étape 6, générer un fichier à signer SIGINFO comprenant au moins les empreintes numériques de travail HDOC et de représentation HIMG. Le fichier à signer SIGINFO peut également comprendre l'identifiant du programme de transformation qui aura été transmis par le serveur distant SRV1 au poste client CLT.

Après avoir visualisé le fichier de représentation IMG, l'utilisateur U peut déclencher une étape 7 de génération par le poste client CLT d'une signature, dite signature client SIGVALUE au moyen de la carte à puce dans le cadre d'une infrastructure à clé publique.

D'une manière générale bien connue de l'homme du métier, la génération d'une signature dans le cadre d'une infrastructure à clé publique fait intervenir la génération d'une empreinte numérique HSIGINFO du fichier à signer SIGINFO suivi d'un chiffrement de cette empreinte numérique par un algorithme asymétrique à la clé publique au moyen de la clé privée de l'utilisateur. Parmi les algorithmes de chiffrement asymétrique susceptibles d'être mis en oeuvre, il est possible de citer RSA, DSA, ECC sans que cette liste ne soit limitative ou exhaustive.

Après la génération de la signature client SIGVALUE, le poste client génère dans une étape 8 un fichier de signature client SIGF comprenant au moins le fichier à signer SIGINFO et la signature client SIGVALUE.

Ce fichier de signature client SIGF peut alors être joint ou lié logiquement (i.e. associé de manière numérique) au document de travail DOC.

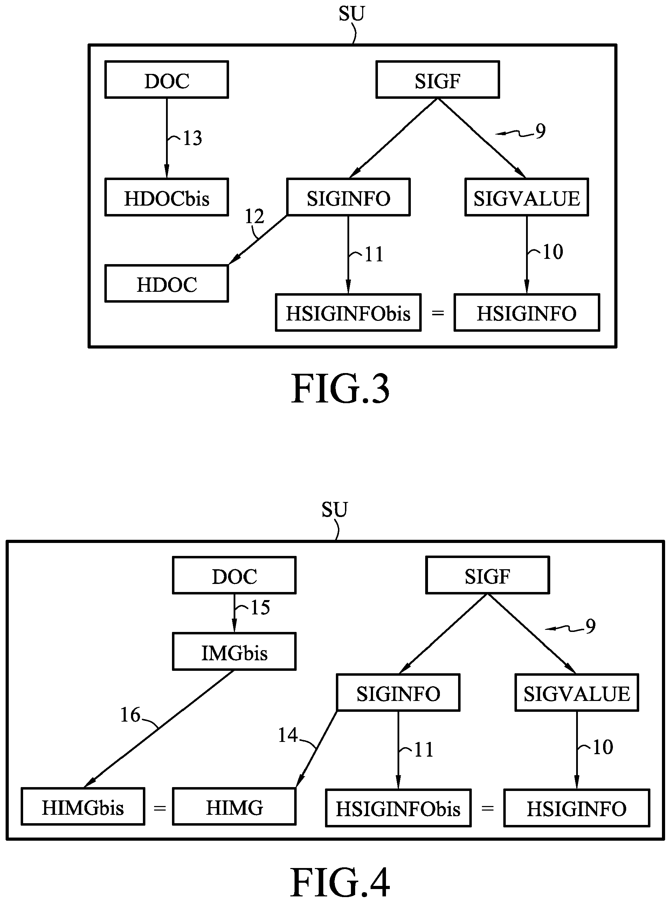

Lorsqu'un système utilisateur SU souhaite mettre en oeuvre le document de travail DOC tout en s'assurant de son authenticité il met en oeuvre une phase de vérification plus particulièrement illustrée à la figure 3. Cette phase de vérification comprend une étape 9 au cours de laquelle il est extrait du fichier de signature SIGF le fichier à signer SIGINFO et la signature client SIGVALUE. Dans une étape de 10 la signature client est décryptée au moyen de la clé publique de l'utilisateur de manière à obtenir l'empreinte numérique du fichier à signer HSIGINFO. Dans une étape 11, il est calculé une nouvelle empreinte numérique HSIGINFObis du fichier à signer SIGINFO au moyen de la même fonction de hachage que celle utilisée à l'étape 7 de génération de la signature client. Cette nouvelle empreinte est comparée à l'empreinte HSIGINFO pour en cas d'identité conclure à l'authenticité du fichier à signer SIGINFO.

Dans une étape 12, l'empreinte numérique de travail HDOC est extraite du fichier à signer SIGINFO. Dans une étape 13 il est généré une nouvelle empreinte numérique HDOCbis à partir du document de travail DOC selon le même algorithme que celui mis en oeuvre à l'étape 6. En cas de concordance entre la nouvelle empreinte numérique HDOCbis et l'empreinte numérique de travail HDOC, il est conclu à l'authenticité du document de travail DOC qui peut alors être mis en oeuvre par le système utilisateur SU.

Lorsque le système utilisateur SU souhaite procéder à la vérification de l'engagement effectivement pris par l'utilisateur U sur la base du fichier de représentation, le système utilisateur SU met en oeuvre une phase de vérification de l'authenticité du fichier de représentation du document de travail à partir du fichier de signature SIGF associé document de travail DOC comme cela est illustré à la figure 4.

Tout d'abord, le système utilisateur SU vérifie l'authenticité du fichier à signer SIGINFO en mettant en oeuvre les étapes 9 à 11 décrites précédemment pour en cas d'authenticité du fichier à signer SIGINFO extraire, dans une étape 14, l'empreinte numérique de représentation HIMG du fichier à signer SIGINFO.

Ensuite, dans une étape 15 le système utilisateur SU génère un nouveau fichier de représentation IMGbis en mettant en oeuvre le même programme de transformation que celui utilisé à l'étape 2. À partir de ce nouveau fichier de représentation IMGbis le système utilisateur génère dans, une étape 16, une nouvelle empreinte numérique HIMGbis en mettant en oeuvre le même algorithme que celui utilisé à l'étape 4. En cas de concordance entre la nouvelle empreinte numérique HIMGbis et l'empreinte numérique de représentation HIMG. La présence de l'identifiant du programme de transformation dans le fichier à signer peut être mise à profit pour vérifier la mise en oeuvre du même programme de transformation à l'étape 2 et à l'étape 16.

Le système utilisateur peut également procéder à une vérification complète qui consistera à effectuer la phase de vérification du document de travail DOC et la phase de vérification du fichier de représentation IMG.

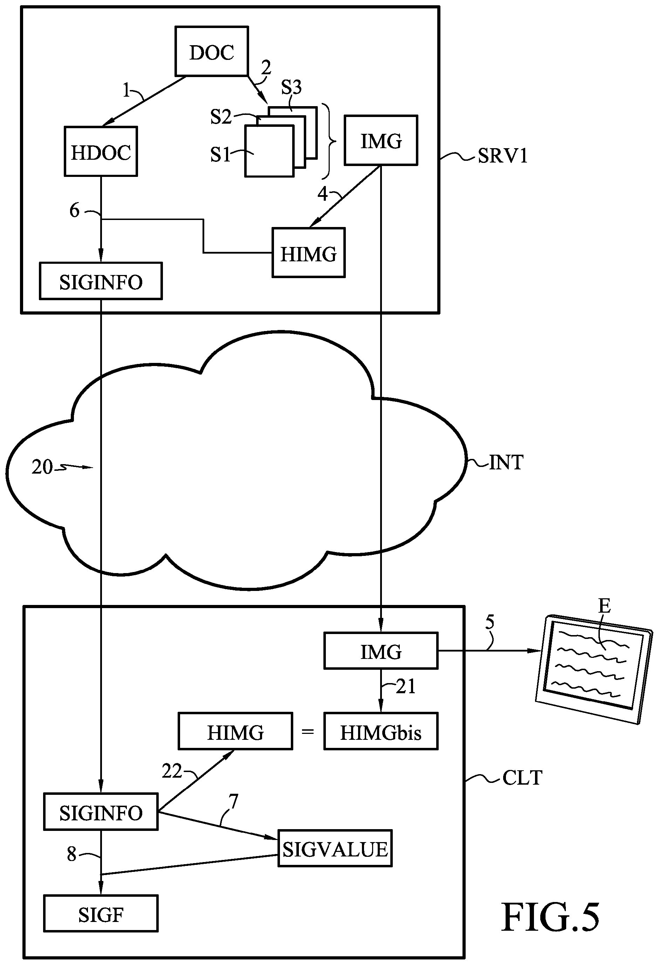

Le procédé, selon l'invention, de signature authentique du document de travail n'est pas nécessairement mis en oeuvre telle que décrit précédemment en relation avec la figure 2. Ainsi la figure 5, décrit une deuxième forme de mise en oeuvre selon laquelle l'étape 4, de génération de l'empreinte numérique de représentation HIMG, et l'étape 6, de génération du fichier à signer SIGINFO, sont effectuées par le serveur distant SRV1.

Selon cette deuxième forme de mise en oeuvre, le serveur distant SRV1 transmet au poste client CLT, dans une étape 20, le fichier à signer SIGINFO et le fichier de représentation IMG.

Par ailleurs, le poste client CLT procède, dans une étape 21, à la génération d'une nouvelle empreinte numérique HIMGbis, dite empreinte de représentation de contrôle, du fichier de représentation IMG en mettant en oeuvre le même algorithme que celui utilisé à l'étape 4. Dans une étape 22, le poste client extrait du fichier à signer SIGINFO l'empreinte numérique de représentation HIMG pour la comparer à l'empreinte de représentation de contrôle HIMGbis. En cas de concordance entre les empreintes numériques HIMGbis et HIMG, le procédé de signature authentique se poursuit par la mise en oeuvre de l'étape 7, de génération de la signature client SIGVALUE, et de l'étape 8, de génération du fichier de signature SIGF. En cas de discordance, le procédé de signature authentique est en revanche interrompu.

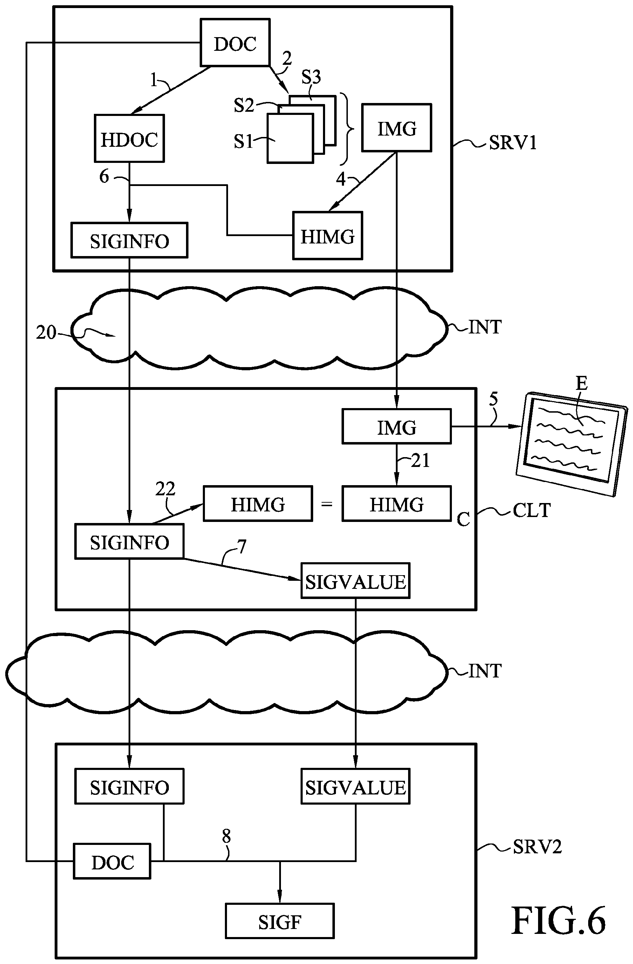

La figure 6, illustre une variante de la deuxième forme de mise en oeuvre du procédé selon laquelle l'étape 8, de génération du fichier de signature SIGF, est réalisée par un deuxième serveur distant SRV2. Selon cette variante, le fichier de signature SIGF comprend le fichier à signer SIGINFO, la signature client SIGVALUE et le document de travail DOC.

Une implémentation possible de l'invention peut être illustrée sur la base du format CMS ("Cryptographie Message Syntax") tel que décrit par la RFC 5652. Le processus de signature du format CMS, dans le cas de figure où des attributs signés sont présent, est le suivant :
- - une empreinte du document de travail est calculée et est placée dans un élément d'attribut nommé "message-digest" qui appartient au type générique Attribute. Cet attribut est décrit au paragraphe 11.2
- - On forme pour chaque signataire du document, le format offrant la possibilité d'en avoir plusieurs, une structure Signerlnfo telle que décrite au paragraphe 5.3 de la RFC
- - Cette structure Signerlnfo comporte un élément SignedAttrs qui est une liste d'éléments de type Attribute individuels. L'ensemble des attributs signés que l'on souhaite inclure dans la signature du document doit être placé dans l'élément SignedAttrs. La liste des attributs doit impérativement comporter un et un seul élément "message-digest" pour faire le lien avec le document signé (tel qu'indiqué de manière répétée aux paragraphes 11.2, 5.3 et 5.4).
- - Le paragraphe 5.4 décrit que dès lors que l'élément SignedAttrs est présent (il est optionnel si aucun attribut signé n'est inclut dans la signature), la valeur de "message digest" est caculé en réalisant une empreinte de cette valeur SignedAttrs
- - Le paragraphe 5.5 précise que cette valeur "message digest" est celle utilisé en entrée de l'algorithme de signature électronique choisi pour calculer la valeur de signature du document

Dans l'implémentation de l'invention, un nouvel attribut est défini, en utilisant la possibilité évoquée dans le paragraphe 11 de définir des attributs additionnels. Un identifiant unique est défini pour cet attribut afin que les applications qui reconnaissent cet identifiant sache en interpréter le contenu. Le format de l'attribut est défini afin de comprendre au minimum une liste des éléments du fichier de représentation, comportant à chaque fois l'empreinte de chaque élément. Ainsi la signature calculée de manière classique suivant le processus du paragraphe 5.5 porte à la fois sur le document d'origine de la manière habituelle pour le format CMS et immédiatement interprétable par toute application, mais porte simultanément aussi, par le biais de ce nouvel attribut, sur le fichier de représentation qui a été présentée à l'utilisateur, et qui pourra donc en cas de doute ou d'ambigüité être utilisée pour lever toute contestation. Le fait qu'une seule opération de signature porte sur les deux éléments évite les doutes qui pourrait subsister si deux opérations séparées étaient réalisés l'une sur le document, l'autre sur le fichier de représentation, et le risque que la signature portant sur le document soit plus tard associée à une signature sur une représentation différente de celle d'origine.

Dans l'invention, dans tous les cas l'étape de calcul de l'élément d'attribut nommé "message-digest" du paragraphe 11.2 est réalisée sur le serveur. L'opération du paragraphe 5.5 est déclenchée par l'application locale en utilisant un moyen de signature sous son controle exclusif. La construction de l'élément SignedAttrs peut au choix soit être réalisée par l'application locale en y intégrant calculant l'empreinte des éléments du fichier de représentation reçu du serveur, soit être réalisé par le serveur, l'application locale ayant la responsabilité de ne l'accepter que si elle peut vérifier que les valeurs d'empreinte qu'il contient sont conformes à celle qu'elle a calculée elle-même sur les éléments du fichier de représentation qu'elle a reçu du serveur.

Le format de l'attribut nouvellement défini par l'invention peut être étendu pour comporter des éléments supplémentaires permettant de réaliser d'autre fonctions de l'invention. Il pourra ainsi comporter un identifiant du procédé utilisé pour créer le fichier de représentation du document afin d'éviter toute ambigüité sur celui-ci, par un exemple une empreinte des librairies utilisée pour implanter le procédé. Il pourra aussi si c'est pertinent comporter un élément de drapeau indiquant pour chaque partie du fichier de représentation si l'utilisateur a demandé à l'application de l'afficher ou a décidé de l'approuver sans en demander l'affichage.

L'application du principe décrit ici s'étend aisément à tout format de signature comprenant des attributs signés pour lesquels il existe des possibilités d'extension, tel qu'aussi le format XAdES défini par le document ETSI TS 101 903, et les éléments de "Signature properties" qu'il comprend.

Par ailleurs, afin d'assurer une traçabilité des systèmes informatiques mis en oeuvre tout au long du procédé, il peut être envisagé de faire intervenir, à chaque intervention d'un serveur, une signature par ce serveur du fichier à signer, dite signature de traçabilité serveur. Cette signature peut être réalisée dans le cadre d'une chaîne de contresignature qui consistera à signer à chaque étape la signature de traçabilité serveur précédente. La signature de traçabilité serveur pourra être vérifiée par chaque serveur ou poste client intervenant dans le processus.

Il peut également être envisagé de mettre en oeuvre un contrôle de l'identité du serveur émettant les fichiers et les documents en incorporant une signature émise par ce serveur, dite signature serveur, dans le fichier à signer. Cette signature serveur pourra par exemple faire l'objet, à chaque étape d'une substitution de manière que le fichier à signer comprenne uniquement la signature du dernier serveur ayant procédé à un traitement. Il peut également être envisagé de conserver dans le fichier à signer la signature serveur de chaque serveur qui est intervenu dans le processus. La signature serveur pourra être vérifiée par chaque serveur ou poste client intervenant dans le processus

Bien entendu, diverses autres variantes au procédé de signature authentique selon l'invention peuvent être envisagées dans le cadre des revendications annexées.

## Revendications

1. Procédé de signature authentique d'un document de travail comprenant les étapes suivantes :
- génération par un serveur distant d'une empreinte numérique du document de travail, dite empreinte numérique de travail,
- génération par le serveur distant d'un fichier de représentation du document de travail, dit fichier de représentation,
- transmission, par le serveur distant à un poste client via un réseau de communication étendu, du fichier de représentation et de l'empreinte numérique de travail,
- génération d'au moins une empreinte numérique du fichier de représentation, dite empreinte numérique de représentation,
- génération d'un fichier à signer comprenant au moins les empreintes numériques de travail et de représentation,
- génération par le poste client d'une seule signature, dite signature client, à partir de l'ensemble du fichier à signer,
- génération d'un fichier de signature client comprenant au moins le fichier à signer et la signature client,
le procédé comprenant en outre les étapes suivantes :
- présentation sur le poste client et à un utilisateur du poste client d'une partie au moins du fichier de représentation,
- initiation par l'utilisateur de l'étape de génération de signature.

2. Procédé de signature authentique d'un document de travail selon la revendication 1, **caractérisé en ce que** ce que l'empreinte numérique du fichier de représentation et le fichier à signer sont générés par le poste client.

3. Procédé de signature authentique d'un document de travail selon la revendication 1, **caractérisé en ce que** ce que l'empreinte numérique du fichier de représentation et le fichier à signer sont générés par le serveur distant et/ou un serveur tiers et transmis au poste client via le réseau de communication étendu.

4. Procédé de signature authentique d'un document de travail selon la revendication 3, **caractérisé en ce qu'**il comprend en outre les étapes suivantes :
- génération par le poste client d'une empreinte numérique du fichier de représentation, dite empreinte de représentation de contrôle,
- comparaison, par le poste client, de l'empreinte de représentation contenue dans le fichier à signer avec l'empreinte de présentation de contrôle pour en cas de comparaison positive autoriser la génération de la signature client.

5. Procédé de signature authentique d'un document de travail selon l'une des revendications précédentes, **caractérisé en ce que** le fichier de signature est généré par le serveur distant ou un serveur tiers.

6. Procédé de signature authentique d'un document de travail selon l'une des revendications précédentes, **caractérisé en ce que** le fichier de représentation est un fichier destiné à une présentation via une interface homme-machine dans une forme directement intelligible par l'utilisateur.

7. Procédé de signature authentique d'un document de travail selon l'une des revendications précédentes, **caractérisé en ce que** le fichier de représentation est adapté pour une présentation ou lecture en continu et comprend au moins une séquence susceptible de faire l'objet d'une présentation, le contenu de chaque séquence du fichier de représentation étant :
- indépendant du contenu des éventuelles séquences qui lui font suites,
- éventuellement dépendant du contenu de la séquence qui la précède immédiatement,
- indépendant de l'environnement d'exécution de l'étape de présentation.

8. Procédé de signature authentique d'un document de travail selon l'une des revendications précédentes, **caractérisé en ce que** l'étape de génération du fichier de représentation met en oeuvre un oeuvre un programme identifié de transformation du document de travail en fichier de représentation.

9. Procédé de signature authentique d'un document de travail selon la revendication 8, **caractérisé en ce que** le fichier de représentation est associé à un identifiant du programme de transformation.

10. Procédé de signature authentique selon la revendication 8 ou 9 **caractérisé en ce que** le fichier à signer comprend l'identifiant du programme de transformation.

11. Procédé de signature authentique d'un document de travail selon l'une des revendications précédentes, **caractérisé en ce que** le fichier à signer comprend une signature serveur générée par le serveur distant s'appliquant sur au moins l'un des éléments suivants :
- l'empreinte de travail,
- l'empreinte de représentation,
- l'identifiant du programme de transformation.

12. Procédé de signature authentique selon la revendication 11 **caractérisé en ce qu'**il comprend une étape de vérification de la signature serveur.

13. Procédé de signature authentique selon l'une des revendications précédentes **caractérisé en ce qu'**il comprend une phase de vérification de l'authenticité du document de travail à partir du fichier de signature associé à ce document qui comprend les étapes suivantes :
- extraction à partir du fichier de signature de l'empreinte de travail,
- calcul d'une nouvelle empreinte numérique à partir du document de travail,
- comparaison de l'empreinte de travail et de la nouvelle empreinte numérique pour en cas d'identité conclure à l'authenticité du document de travail.

14. Procédé de signature authentique selon l'une des revendications précédentes **caractérisé en ce qu'**il comprend une phase de vérification de l'authenticité du fichier de représentation du document de travail à partir du fichier de signature associé au document de travail :
- extraction à partir du fichier de signature de l'empreinte de représentation,
- génération, à partir du document de travail, d'un nouveau fichier de représentation,
- calcul d'une nouvelle empreinte numérique à partir du nouveau fichier de représentation,
- comparaison de l'empreinte de représentation et de la nouvelle empreinte numérique pour en cas d'identité conclure à l'authenticité du fichier de représentation du document de travail.

## Patentansprüche

1. Verfahren zur authentischen Unterzeichnung eines Arbeitsdokuments mit den folgenden Schritten:
- Erzeugen eines als digitalen Arbeitsabdruck bezeichneten digitalen Abdrucks des Arbeitsdokuments durch einen entfernten Server,
- Erzeugen einer als Darstellungsdatei bezeichneten Darstellungsdatei des Arbeitsdokuments durch den entfernten Server,
- Übermitteln der Darstellungsdatei und des digitalen Arbeitsabdrucks durch den entfernten Server über ein weites Kommunikationsnetz an eine Kundenstation,
- Erzeugen wenigstens eines als digitalen Darstellungsabdruck bezeichneten digitalen Abdrucks der Darstellungsdatei,
- Erzeugen einer zu unterzeichnenden Datei, die wenigstens die digitalen Arbeits- und Darstellungsabdrücke enthält,
- von der Gesamtheit der zu unterschreibenden Datei ausgehend, Erzeugen einer einzigen als Kundenunterschrift bezeichneten Unterschrift durch die Kundenstation,
- Erzeugen einer Kundenunterschriftsdatei, die wenigstens die zu unterzeichnende Datei und die Kundenunterschrift enthält,
wobei das Verfahren außerdem die folgenden Schritte aufweist:
- Darstellen wenigstens eines Teils der Darstellungsdatei auf der Kundenstation und für einen Nutzer der Kundenstation,
- Einleiten des Schritts der Erzeugung der Unterschrift durch den Nutzer.

2. Verfahren zur authentischen Unterzeichnung eines Arbeitsdokuments gemäß Anspruch 1, **dadurch gekennzeichnet, daß** der digitale Abdruck der Darstellungsdatei und die zu unterzeichnende Datei durch die Kundenstation erzeugt werden.

3. Verfahren zur authentischen Unterzeichnung eines Arbeitsdokuments gemäß Anspruch 1, **dadurch gekennzeichnet, daß** der digitale Abdruck der Darstellungsdatei und die zu unterzeichnende Datei durch den entfernten Server und/oder einen dritten Server erzeugt und der Kundenstation über das weite Kommunikationsnetz übermittelt werden,

4. Verfahren zur authentischen Unterzeichnung eines Arbeitsdokuments gemäß Anspruch 3, **dadurch gekennzeichnet, daß** es außerdem die folgenden Schritte aufweist:
- Erzeugen eines als Darstellungskontrollabdruck bezeichneten digitalen Abdrucks der Darstellungsdatei durch die Kundenstation,
- Vergleich des im zu unterzeichnenden Dokument enthaltenen Darstellungsabdrucks mit dem Darstellungskontrollabdruck durch die Kundenstation, um im Falle eines positiven Vergleichs die Erzeugung der Kundenunterschrift freizugeben.

5. Verfahren zur authentischen Unterzeichnung eines Arbeitsdokuments gemäß einem der vorangehenden Ansprüche, **dadurch gekennzeichnet, daß** die Unterschriftsdatei durch den entfernten Server oder einen dritten Server erzeugt wird.

6. Verfahren zur authentischen Unterzeichnung eines Arbeitsdokuments gemäß einem der vorangehenden Ansprüche, **dadurch gekennzeichnet, daß** die Darstellungsdatei eine Datei ist, die für eine Darstellung über eine Mensch-Maschine-Schnittstelle in einer durch den Nutzer direkt lesbaren Form bestimmt ist.

7. Verfahren zur authentischen Unterzeichnung eines Arbeitsdokuments gemäß einem der vorangehenden Ansprüche, **dadurch gekennzeichnet, daß** die Darstellungsdatei für ein kontinuierliches Darstellen oder Lesen ausgelegt ist und wenigstens eine darstellbare Sequenz aufweist, wobei der Inhalt jeder Sequenz der Darstellungsdatei
- vom Inhalt der ihr eventuell folgenden Sequenzen unabhängig ist,
- eventuell vom Inhalt der ihr direkt vorangehenden Sequenz abhängig ist,
- von der Durchführungsumgebung des Darstellungsschritts unabhängig ist.

8. Verfahren zur authentischen Unterzeichnung eines Arbeitsdokuments gemäß einem der vorangehenden Ansprüche, **dadurch gekennzeichnet, daß** der Schritt des Erzeugens der Darstellungsdatei ein identifiziertes Programm zur Umwandlung des Arbeitsdokuments in eine Darstellungsdatei durchführt.

9. Verfahren zur authentischen Unterzeichnung eines Arbeitsdokuments gemäß Anspruch 8, **dadurch gekennzeichnet, daß** die Darstellungsdatei mit einem Identifizierungskennzeichen des Umwandlungsprogramms verbunden ist.

10. Verfahren zur authentischen Unterzeichnung gemäß Anspruch 8 oder 9, **dadurch gekennzeichnet, daß** die zu unterzeichnende Datei das Identifizierungskennzeichen des Umwandlungsprogramms aufweist.

11. Verfahren zur authentischen Unterzeichnung eines Arbeitsdokuments gemäß einem der vorangehenden Ansprüche, **dadurch gekennzeichnet, daß** die zu unterzeichnende Datei eine Server-Unterschrift aufweist, die vom entfernten Server erzeugt worden ist und die auf wenigstens eins der folgenden Elemente angewendet wird:
- den Arbeitsabdruck,
- den Darstellungsabdruck,
- das Identifizierungskennzeichen des Umwandlungsprogramms.

12. Verfahren zur authentischen Unterzeichnung gemäß Anspruch 11, **dadurch gekennzeichnet, daß** es einen Schritt der Überprüfung der Server-Unterschrift aufweist.

13. Verfahren zur authentischen Unterzeichnung gemäß einem der vorangehenden Ansprüche, **dadurch gekennzeichnet, daß** es eine Phase der Überprüfung der Authentizität des Arbeitsdokuments auf der Grundlage der diesem Dokument zugeordneten Unterschriftsdatei aufweist, die die folgenden Schritte aufweist:
- Herausziehen des Arbeitsabdrucks aus der Unterschriftsdatei,
- Berechnen eines neuen digitalen Abdrucks auf der Grundlage des Arbeitsdokuments,
- Vergleich des Arbeitsabdrucks mit dem neuen digitalen Abdruck, um im Falle einer Identität auf die Authentizität des Arbeitsdokuments zu schließen.

14. Verfahren zur authentischen Unterzeichnung gemäß einem der vorangehenden Ansprüche, **dadurch gekennzeichnet, daß** es eine Phase der Überprüfung der Authentizität der Darstellungsdatei des Arbeitsdokuments auf der Grundlage der dem Arbeitsdokument zugeordneten Unterschriftsdatei aufweist:
- Herausziehen des Darstellungsabdrucks aus der Unterschriftsdatei,
- Erzeugen einer neuen Darstellungsdatei auf der Grundlage des Arbeitsdokuments.
- Berechnen eines neuen digitalen Abdrucks auf der Grundlage der neuen Darstellungsdatei,
- Vergleich des Darstellungsabdrucks mit dem neuen digitalen Abdruck, um im Falle einer Identität auf die Authentizität der Darstellungsdatei des Arbeitsdokuments zu schließen.

## Claims

1. Authentic signature method of a work document comprising the following steps:
- generation by a remote server of a digital fingerprint of the work document, hereinafter the digital work fingerprint;
- generation by the remote server of a representation file of the work document, hereinafter the representation file;
- transmission by the remote server to a client station via a wide area communication network of the representation file and the digital work fingerprint;
- generation of at least one digital fingerprint of the representation file, hereinafter the digital representation fingerprint;
- generation of a file to be signed comprising at least the digital work and representation fingerprints;
- generation by the client station of only one signature, hereinafter the client signature, from the file to be signed;
- generation of a client signature file comprising at least the file to be signed and the client signature,
the method further comprising the following steps:
- presentation on the client station and to a user of the client station of at least a part of the representation file,
- initiation by the user of the signature generation step.

2. Authentic signature method of a work document according to claim 1, **characterised in that** the digital fingerprint of the representation file and the file to be signed are generated by the client station.

3. Authentic signature method of a work document according to claim 1, **characterised in that** the digital fingerprint of the representation file and the file to be signed are generated by the remote server and/or a third-party server and transmitted to the client station via the wide area communication network.

4. Authentic signature method of a work document according to claim 3, **characterised in that** it further comprises the following steps:
- generation by the client station of a digital fingerprint of the representation file, hereinafter the control representation fingerprint;
- comparison by the client station of the representation fingerprint contained in the file to be signed with the control presentation fingerprint in order to authorise, in case of a match, the generation of the client signature.

5. Authentic signature method of a work document according to one of the previous claims **characterised in that** the signature file is generated by the remote server or a third-party server.

6. Authentic signature method of a work document according to one of the previous claims **characterised in that** the representation file is a file intended for a presentation via a man-machine interface in a form directly intelligible to the user.

7. Authentic signature method of a work document according to one of the previous claims **characterised in that** the representation file is adapted for a continuous presentation or a continuous reading and comprises at least one sequence liable to be covered by a presentation, the content of each sequence of the representation file being:
- independent of the content of subsequent sequences, if any;
- possibly dependent on the content of the sequence immediately preceding it;
- independent of the execution environment of the presentation step.

8. Authentic signature method of a work document according to one of the previous claims **characterised in that** the step of generating the representation file implements an identified program for transforming the work document into the representation file.

9. Authentic signature method of a work document according to claim 8 **characterised in that** the representation file is associated with an identifier of the transformation program.

10. Authentic signature method according to claim 8 or 9 **characterised in that** the file to be signed includes the identifier of the transformation program.

11. Authentic signature method of a work document according to one of the previous claims **characterised in that** the file to be signed contains a server signature generated by the remote server applied to at least one of the following elements:
- the work fingerprint;
- the representation fingerprint;
- the identifier of the transformation program.

12. Authentic signature method according to claim 11 **characterised in that** it includes a step of checking the server signature.

13. Authentic signature method according to one of the previous claims **characterised in that** it includes a step of checking the authenticity of the work document from the signature file associated with this document which includes the following steps:
- extraction of the work fingerprint from the signature file;
- calculation of a new digital fingerprint from the work document;
- comparison of the work fingerprint and the new digital fingerprint in order to conclude that the work document is authentic in case of identity.

14. Authentic signature method according to one of the previous claims **characterised in that** it includes a step of checking the authenticity of the representation file of the work document from the signature file associated with the work document:
- extraction of the representation fingerprint from the signature file;
- generation of a new representation file from the work document;
- calculation of a new digital fingerprint from the new representation file;
- comparison of the representation fingerprint and the new digital fingerprint in order to conclude that the representation file of the work document is authentic in case of identity.
